# EUROPEAN PATENT APPLICATION

(11) **EP 1 178 628 A2**
(43) Date of publication of application: **06.02.2002**
(21) Application number: 01401931.9
(22) Date of filing: 19.07.2001
(51) Int. Cl.: H04L 12/24

(54) **Method and device for the remote configuration and monitoring of telecommunication network elements**

(30) Priority: 31.07.2000 IT MI001762
(71) Applicant: ALCATEL, 75008 Paris (FR)
(72) Inventor: Fossati, Vittorio, 20061 Carugate (Milano) (IT); Fumagalli, Aurelio, 23876 Monticello Brianza (Lecco) (IT)
(74) Representative: Colombo, Stefano Paolo

(57) **Abstract**

A method and device is described for the configuration and the remote monitoring of telecommunication network elements that allows the management of a network apparatus through a remotely located generic terminal, that can be either a PC/ workstation, configured with the management software developed for the purpose (proprietary software), or any terminal for accessing Internel equipped with a standard browser.

## Description

The present invention relates to the field of telecommunications network management systems and more precisely to a method and device for the remote configuration and monitoring of telecommunications network elements, comprising management functions of said network elements through a management system (TMN) and terminals (T4, T5, T6) located at said network elements or in operation systems (0S).

The various elements of a telecommunications network are usually managed through a substantially known TMN (Telecommunication Management Network) architecture network management system supporting the management activities such as planning, configuration, installation and maintenance.

Through said management system, the network elements NE are interconnected with one or more Operation Systems (OS) for the information interchange necessary for the management of the entire telecommunications network.

Such management system is composed of proprietary software modules and is realized through a known generic information model (for instance InfoModel) and standard interfaces (e.g. Q interface). The TMN architecture standards are defined by the ITU-T Recommendations, in particular by G. 773, G. 774 and G. 784, that contemplate a communication mechanism, based upon ISO-OSI communication levels, using the CMIP protocol (CMISE services), at application level. The standard also defines, for the communication between NE and US, the Q3 interface.

From the user standpoint, the supervision of a network element can be managed in two known ways: either by directly intervening from the place where the network element NE is situated or, through the management network, by the operating center OS.

The proprietary software modules are in part located on the managed network element NE and in part resident in the operating center OS.

The solution adopted heretofore for the management of the network elements NE allows to directly intervene on the network element either with a local management terminal or with a terminal located in the operating center OS connected through the network. In any case the operator needs to connect the terminal ((Personal Computer or workstation) with the element by physical line: hence he must have at its disposal at least one telephone line/mobile terminal or local network (LAN) access point.

The problem as to how the supervision of every network element NE can be performed from any place and with less restriction on the necessary instrumentation is still not completely solved.

Therefore, the objective of the present invention is to solve the aforesaid problems and to indicate a method and device for the configuration and the monitoring of telecommunications network elements that allows the management of a network apparatus through a generic terminal, remotely located, which can be both a PC/workstation configured with the purpose-developed management software (proprietary software), and any terminal for accessing the network, for instance the Internet network, provided with a standard browser. The generality of the terminal is intended in its broadest sense: thus, besides the PC provided with standard browser (e.g. Netscape, Microsoft Internet Explores, etc..), there are also included the network access mobile terminals, such as the GSM cellular telephone, with capability of transactions with WAP or UMTS protocol, which inherently have the capability of accessing the Internet network service.

The peculiarity of the solution resides in the fact that the generalization of the supervision terminal is realized by ensuring the complete integration with the standard management proposed by CCITT (now ITU-T) based upon the abstraction (InfoModel) of the managed physical apparatus and on the Q interface.

In order to achieve such objectives, the subject of the present invention is a method and device for the remote configuration and monitoring of telecommunication network elements, as well as a remote terminal, a telecommunications network and a network element as best described in the claims which form an integral part of the present description.

The method and device for the remote configuration and monitoring of telecommunications network elements, subject of the invention, exhibits numerous advantages:
- Advantages to the user:
   - Supervision terminal: absence of constraints on the type of terminal to be used for the supervision and significantly reduced requirements of the terminal used for the supervision.
   - Management software: no special software to be installed on the terminal is required; the type of terminal utilized is transparent to the apparatus; the supervision is immediate as compared with a conventional supervision.
   - Supervision activity: the interface to the operator, being that of a standard browser, is user-friendly; the instructive requirements of the operators are reduced; the access to the apparatus to be supervised is controllable according to the needs of the security strategies.
   - Advantages to the provider: in utilizing the support of a standard browser, it is not necessary to develop software not resident on the apparatus; the development and the supervision procedure is the same for the common aspects of different apparatus.

Further advantages are: capability to offer a simplified and low-cost supervision system. Capability to offer functionalities not yet modelled at standard level and therefore not implementable through conventional management. Ease of remote access to the apparatus to be managed. The installation time is significantly reduced. The proposed architecture is easily extendable to all the types of apparatus and is open to the future access technologies in the ambit of Internet.

Further objectives and advantages of the present invention will be clear from the following detailed description of an embodiment thereof, as well as of a variant thereof, and from the attached drawings merely given by the way of explanation and not of limitation, wherein:
- Fig. 1 shows a general schematic of network supervision in which the present invention is applied,
- Fig. 2 shows a first variant of the software architecture implementing the present invention;
- Fig. 3 shows a second variant;
- Fig. 4 shows the mode of operation of the software architecture;
- Fig. 5 shows a flow chart of the software module EW of Figs. 2 to 4.

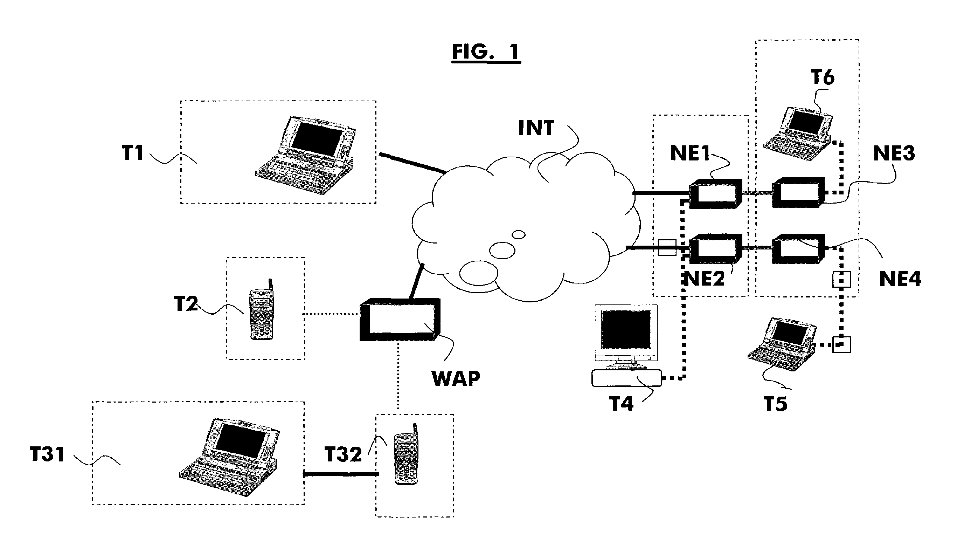

In Fig. 1, a conventional management system providing for the InfoModel message exchange (CMIP protocol on 150-OSI stack) between supervision system (through terminals T4, T5, T6) and network elements (NE1, ..., NE4), is extended according to the present invention, with the capability to access the apparatus through an Internet (INT) access terminal: the terminal may be a PC T1 provided with a standard browser (e.g. Netscape, Microsoft Internet Explorer, etc..), or an Internet access mobile terminal T2 or T32, such as a GSM cellular telephone, through which a PC T31 is eventually connected, with capability of transactions with WAP, or even UMTS, protocol.

From the terminal (T1, T2, T31, T32), through Internet, the operator sends the request for the supervision of a specific network element NE1, ..., NE4 of the telecommunications network. The information of the apparatus is displayed on the terminal screen through standard-format pages depending on the type of terminal (e.g. HTML format for the PC with standard browser or WML format for WAP mobile telephones). The requests from the operator are converted into standard Info Model requests; conversely, the responses are converted into messages in the proper format to be sent to the requiring terminal.

According to one aspect of the present invention, it is contemplated to provide the supervision software architecture with an additional module (EW) allowing the implementation of the remote supervision.

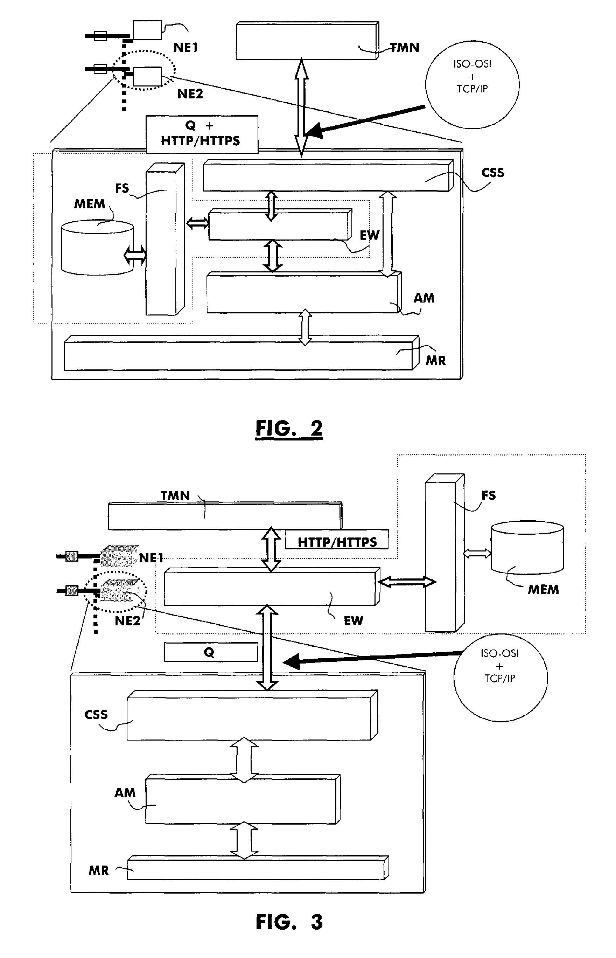

A first variant is depicted in Fig. 2. In the figure, TMN denotes the known network management systems. As mentioned earlier, such management system is composed of proprietary software modules and is realized through a generic information model (InfoModel) and standard interfaces (Q interface) that provide for a communication mechanism, based on the ISO-OSI communication levels, using the CMIP protocol (CMISE services) at application level and the Q interface for the communication between NE and TMN.

NE1 and NE2 represent network elements that from the supervision function standpoint are composed of the following functional blocks:
- a first network interface software module CSS of known type which manages the communication protocols supported by the network element: in particular it manages the ISO-OSI and TCP/IP protocols;
- a second known software module AM performing the management of the supervision functionalities supported by the network element, both in the Info Model standard modality, through the Q interface, and in the Internet/Web modality;
- the network element MR itself, understood as resource to be managed in supervision, which communicates with the aforesaid software modules in a known manner;
- a software module EW that, in accordance with the present invention, manages the Internet/Web requests supported by the network element with relevant conversion of the operations from HTTP format into InfoModel standard format and vice versa, as described more in detail hereinafter. In this variant the module EW is integrated and communicates with the other standard modules CSS, AM. Moreover, EW cooperates with a known software module FS for the management of the files and of the directories of the mass storage MEM to be sent to the external supervision terminal; the module FS with the respective storage MEM can be pre-existent, managed by the modules AM and CSS, managing the files and directories related to the known functionality, to which the new functionality managed by module EW is added.

A second variant is shown in Fig. 3, where the same modules of Fig. 2 are referenced by the same names, the difference being that the EW module with respective FS and MEM modules may be situated outside the network element, in a proper apparatus, for instance in the event of insertion in existing network elements.

Hence in operation, the supervision software standard architecture is enhanced by the module EW which is seen by the external Internet terminal as a network server (HTTP server or even WAP, UMTS or other standard server) ready to respond to the requests from the Internet network. With respect to a standard server, the module converts the requests from the Internet network into Info Model requests to the conventional NE software. The relevant responses are in turn converted into compatible pages by the terminal used and returned via Internet to the requiring terminal.

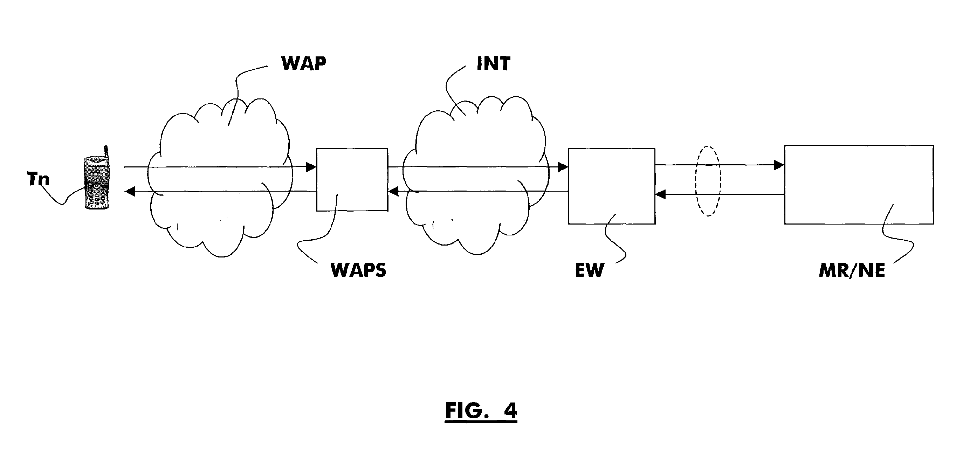

The described sequence, in the non limiting instance where a WAP mobile terminal is used, is depicted in Fig. 4.

A request (in WAP format) is sent by the terminal Tn to the apparatus (specified by its identification URL), inserted by WAPS Gateway into the Internet network INT through HTTP, or HTTPS protocol in case of safe transaction. Through Internet the request reaches the EW module that converts it into a standard request to the network element MR/NE (InfoModel request with CMIP protocol). Conversely, the response of the network element MR/NE is converted into a response in the standard format of the terminal Tn. In this way it is possible to have the updated state of the apparatus on the WAP terminal Tn.

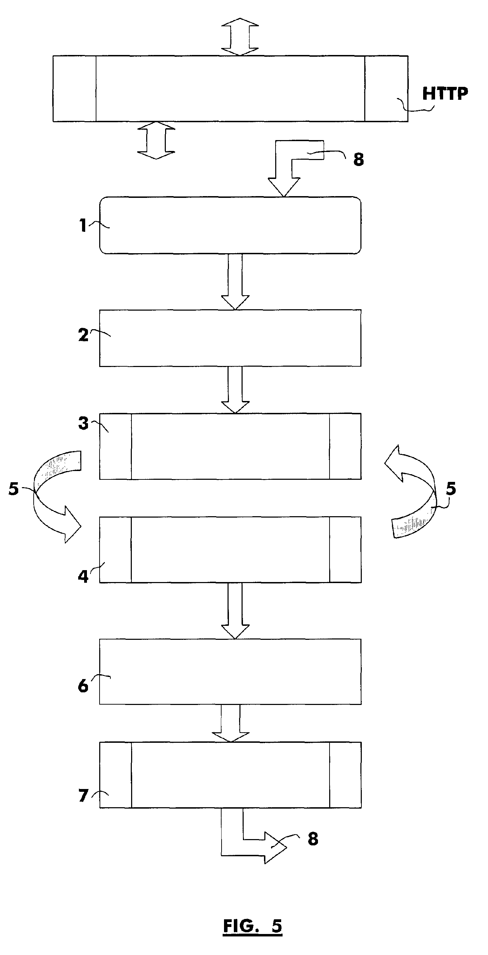

In Fig. 5 there is shown an operation flow diagram of the software module EW. It is composed of two sub-modules:
- A first sub-module HTTP performs the functions of a conventional server for the management of the HTTP Internet bidirectional communication protocol with the line and with the second sub-module.
- A second sub-module whose operation flow is the following:
   - At step 1 it is waiting for an HTTP format request from the first sub-module.
   - At step 2, through communication with the CSS module (Fig. 2), it performs a conversion of the HTTP request into one or more info Model requests.
   - At step 3 it sends every request, received from step 2, to module AM (Fig. 2) for the management of that request.

The requests relate to the management of functionality or configuration of the network element and relevant alarms and are divided into functionality families, such as for instance: management of the element, of the transmission, of the monitoring, of the behaviour characteristics, of the link security, of the communication and routing, of the connection, of the support, of the features of the software itself, and others. Each functionality is univocally identified by code.

At step 4, it manages the responses to the above requests coming from module AM, by repeating steps 3 and 4 up to exhaustion thereof (step 5).

At step 6, through cooperation with module FS and storage MEM, it creates a file to be sent to the supervision terminal Tn (Fig. 4), i.e. it interacts with module FS to create a file in MEM containing information suitable for creating the response visual displays on the terminal in the HTTP format.

At step 7 it reads the file out of MEM and sends it to the HTTP sub-module, then (8) it returns to step 1.

The programming language used to realize the EW module is for instance the C one or the C++.

By utilizing the solution of the Internet access standard protocols, all the known systems used for the protection of Internet transactions become available at once. Being the intermediate gateways the weak point for the link security, the WAP protocol can be utilized as a further variant up to the EW module.

It is apparent that what has been described in detail is merely given by way of explanation and not of limitation, and that further variants are possible without departing from the scope of the invention.

## Claims

1. Method for the management of telecommunications network elements (NE1, ..., NE4), comprising management functions of said network elements through a management system (TMN) and terminals (T4, T5, T6) located at said network elements or in operating centers (OS), **characterized in that** it comprises an additional management function of said network elements through one or more terminals (T1, T2, T31, T32) placed remotely and simulating the functions of said terminals (T4, T5, T6) located at said network elements or in operating centers (OS).

2. Method according to claim 1, **characterized in that** said remotely placed terminals comprise mobile terminals connected to said management system through one or more networks, for instance GSM and Internet, and using WAP or UMTS communication protocols.

3. Method according to claims 1 or 2, **characterized in that** said additional management function of network elements through one or more terminals (T1, T2, T31, T32) placed remotely is performed by a software module (EW) cooperating with other software modules (CSS, AM), which form said management system (TMN), located in said network elements, and performs the functions of:
- management of the bidirectional communication protocol (HTTP) between said remotely placed terminals and said management system (TMN);
- management of said network elements by said remotely placed terminals.

4. Method according to claim 3, **characterized in that** said software module (EW) is integrated with said other software modules (CSS, AM) in said network elements.

5. Method according to claim 3, **characterized in that** said software module (EW) is situated outside said network elements in a suitable apparatus.

6. Method according to any of claims 3 to 5, **characterized in that** said software module (EW), for said function of carrying out the management of said network elements by said remotely placed terminals, carries out the following operation steps:
- in a first step (1) it is waiting for a request from bidirectional communication protocol (HTTP) management function between said remotely placed terminals and said management system (TMN);
- in a second and third steps (2, 3), through communication with said other software module (CSS, AM), it carries out a conversion of the request from said first step into one or more requests for said other modules for the management of the request itself;
- in a fourth step (4) it manages responses to said requests coming from said other software modules (CSS, AM), by repeating said third and fourth steps up to the exhaustion thereof;
- in a fifth step (6) it creates a file containing information suitable for creating response visual displays on said remotely placed terminals;
- in a sixth step (7, 8) it sends said file to said bidirectional communication protocol (HTTP) management function between said remotely placed terminals and said management system (TMN) and then returns to said first step (1).

7. Device for the management of telecommunications network elements (NE1, ..., NE4), comprising means for the management of said network elements through a management system (TMN) and terminals (T4, T5, T6) located at said network elements or in operating centers (OS), **characterized in that** it further comprises means for the implementation of the method as in any of claims 1 to 6.

8. Remote terminal (Tn) **characterized in that** it comprises means for cooperating with the device of claim 7, through WAP or UMTS communication protocols, for the implementation of the method as in any of claims 1 to 6.

9. Telecommunications network **characterized in that** it comprises a device in accordance with claim 7.

10. Telecommunications network element (NE1, ..., NE4), **characterized in that** it comprises means for the implementation of the method as in any of claims 1 to 6.

11. Computer program comprising encoding means adapted to carry out all the steps of claims 3 or 6 when said program is run on a computer.

12. Computer-readable medium having a program recorded thereon, said computer-readable medium comprising encoding means adapted to carry out all the steps of claims 3 or 6 when said program is run on a computer.
